Europäisches Patentamt

European Patent Office

Office européen des brevets

(11) Veröffentlichungsnummer: **0 499 069 A1**

## EUROPÄISCHE PATENTANMELDUNG

(21) Anmeldenummer: **92101122.7**

(22) Anmeldetag: **24.01.92**

(51) Int. Cl.5: **B29B 7/76**

(30) Priorität: **15.02.91 DE 4104647**

(43) Veröffentlichungstag der Anmeldung:
**19.08.92 Patentblatt 92/34**

(84) Benannte Vertragsstaaten:
**BE CH DE ES FR GB IT LI**

(71) Anmelder: **ELASTOGRAN POLYURETHANE GMBH**
**Landwehrweg**
**W-2844 Lemförde(DE)**

(72) Erfinder: **Reisinger, Gerhard**
**Amtmannstrasse 7**
**W-8195 Egling 2(DE)**

(74) Vertreter: **Karau, Wolfgang, Dr.**
**BASF Aktiengesellschaft Carl-Bosch-Strasse 38**
**W-6700 Ludwigshafen(DE)**

(54) **Mischvorrichtung zur Verarbeitung flüssiger Mehrkomponenten-Kunststoffe, insbesondere Polyurethan.**

(57) Die Mischvorrichtung, die wie eine bekannte Mischvorrichtung mit Rücklaufnuten (18,19) im Steuerkolben (2) aufgebaut ist, ist dadurch gekennzeichnet, daß die Rücklaufnuten (18,19) eine Länge aufweisen, die gleich dem Absatnd der durch sie zu verbindenden Eintritts- und Rücklauföffnungen (4 bis 7) ist, wobei der Steuerkolben (2) in eine Zwischenstellung (B), in der die Rücklaufnuten (18,19) die Eintrittsöffnungen (4,5) mit den zugeordneten Rücklauföffnungen (6,7) verbinden, und in eine weiter vorgeschobene Räumstellung (c) bewegbar ist, in der die Rücklaufnuten nicht mehr mit den Rücklauföffnungen verbunden sind. Durch die kurzen Rücklaufnuten, deren Länge nicht mehr von der Länge der Mischkammer bzw. des Austrittsrohres der Mischkammer abhängig ist, wird die Gesamtbaulänge der Mischvorrichtung verkürzt. Sie beträgt nur noch das Zweifache des Hubes des Steuerkolbens. Der Halsbereich des Steuerkolbens wird verkürzt, wodurch die Klebefläche verkleinert wird. Bei langem Auslaufrohr ist die Mischvorrichtung dennoch kurz.

FIG.2

Die Erfindung betrifft eine Mischvorrichtung nach dem Oberbegriff des Patentanspruchs 1.

Eine derartige Mischvorrichtung ist aus der DE-PS 20 07 935 und aus der DE-PS 28 01 942 bekannt. Eine bekannte Mischvorrichtung ist in Fig. 1 dargestellt.

Bei dieser bekannten Mischvorrichtung weisen die Rücklaufnuten in Bewegungsrichtung des Steuerkolbens eine Länge auf, die so bemessen ist, daß die Eintrittsöffnungen auch dann über die zugeordneten Rücklaufnuten mit den Rücklauföffnungen verbunden sind, wenn der Steuerkolben seine vorgeschobene Absperr- oder Räumstellung einnimmt. Anders ausgedrückt, immer dann, wenn der Steuerkolben aus der Misch- oder Schußstellung in die Absperr- oder Räumstellung bewegt wird, ist jede Eintrittsöffnung mit ihrer Zugeordneten Rücklauföffnung verbunden. In der vorgeschobenen Absperr- oder Räumstellung verlaufen die Rücklaufnuten bis in die Nähe der Austrittsöffnung. Die Länge der Rücklaufnuten wird im wesentlichen bestimmt durch den Gesamthub des Steuerkolbens. Hierdurch ist wiederum bestimmt, daß in die Gesamtbaulänge der Mischvorrichtung der Hub des Steuerkolbens dreimal eingeht. Wenn die Austrittsöffnung der Mischkammer, bedingt durch einen langen Auslauf, weit von den Eintrittsöffnungen für die Komponenten entfernt liegt, bedeutet dieses lange Rücklaufnuten und damit eine entsprechend große Baulänge.

Der Erfindung liegt nun die Aufgabe zugrunde, eine Mischvorrichtung der eingangs genannten Art zu schaffen, die eine geringere Baulänge aufweist, d.h., bei der die Länge der Rücklaufnuten von der Länge der Mischkammer bzw. des Auslaufes unabhängig ist.

Diese Aufgabe wird durch das Kennzeichen des Anspruches 1 gelöst.

Erfindungsgemäß sind die Rücklaufnuten nur so lange, daß sie während der Bewegung des Steuerkolbens auf einem ersten Abschnitt den Rücklauf der Komponenten von den Eintrittsöffnungen zu dem Rücklauf sicherstellen. Bei fortschreitender Bewegung des Steurkolbens bis zur Austrittsöffnung aus der Mischkammer, deren Länge unabhängig von der Länge der Rücklaufnuten ist, findet der Rücklauf nicht mehr durch die Rücklaufnuten statt. Während dieser Bewegung des Steuerkolbens in die Absperr- bzw. Räumstellung zur Reinigung der Mischkammer und des Auslaufs wird für einen entsprechenden Rücklauf auf andere, bekannte Weise, beispielsweise durch entsprechende Ventile, gesorgt. Im normalen Betrieb wird der Steuerkolben nach Beendigung eines Mischvorganges oder Schusses aus der Mischstellung über die Zwischenstellung in die Räumstellung bewegt. Im Anschluß daran wird er zurück in die Zwischenstellung bewegt, in der er dann verbleiben kann, bis der nächste Schuß erfolgen soll. In dieser Zwischenstellung ist dann für den herkömmlichen Rücklauf durch die Rücklaufnuten und damit durch die Mischkammer selbst gesorgt. In der vorgeschobenen Räumstellung geschieht dieses durch eine externe Komponentensteuerung, die an sich bekannt ist. Die Länge der Rücklaufnuten ist nur noch abhängig von dem Abstand der zu bedienenden Komponentenöffnungen. Von der Länge der Mischkammer bzw. eines angesetzten Auslaufrohres ist diese Rücklaufnutenlänge unabhängig. Während des Räumvorgangs findet keine Rezirkulation über die Rücklaufnuten statt, deshalb bestehen auch nur geringe Anforderungen an das Dichtverhalten im Bereich der Auslaufstelle. Es ist daher möglich, eine getrennte Auslauftülle (Anspruch 2) anzusetzen, die nicht genau gefertigt sein muß und beliebigen Anforderungen angepaßt werden kann.

Die Baulänge der gesamten Mischvorrichtung mit dem Hydraulikteil verkürzt sich. Dieses bedeutet, daß die Länge in der Praxis nur noch durch das Zweifache des Hubes des Steuerkolbens bestimmt wird.

Zusammenfassend kann daher gesagt werden, daß die Mischvorrichtung nach der Erfindung eine geringere Gesamtlänge im Vergleich zu bekannten Mischvorrichtungen aufweist, da die Rücklaufnutenlänge nicht mehr von der Länge des Gesamthubes des Steuerkolbens, sondern nur noch von dem Abstand der zu bedienenden Öffnungen abhängig ist. Es sind unterschiedlich lange Auslauftüllen an die Mischkammer ansetzbar. Die Paßgenauigkeit zwischen Steuerkolben und Auslauftülle ist nicht mehr kritisch.

Im folgenden wird die Erfindung unter Hinweis auf die Zeichnungen anhand eines Ausführungsbeispieles näher erläutert.

Es zeigt:

Fig. 1    einen schematischen Längsschnitt durch eine bekannte Mischvorrichtung in zwei Stellungen;

Fig. 2    einen der Fig. 1 entsprechenden schematischen Längsschnitt durch eine Mischvorrichtung nach der Erfindung; und

Fig. 3    eine Einzelheit des Austrittsbereichs der Mischvorrichtung nach Fig. 2 mit einer abgewandelten Ausführungsform.

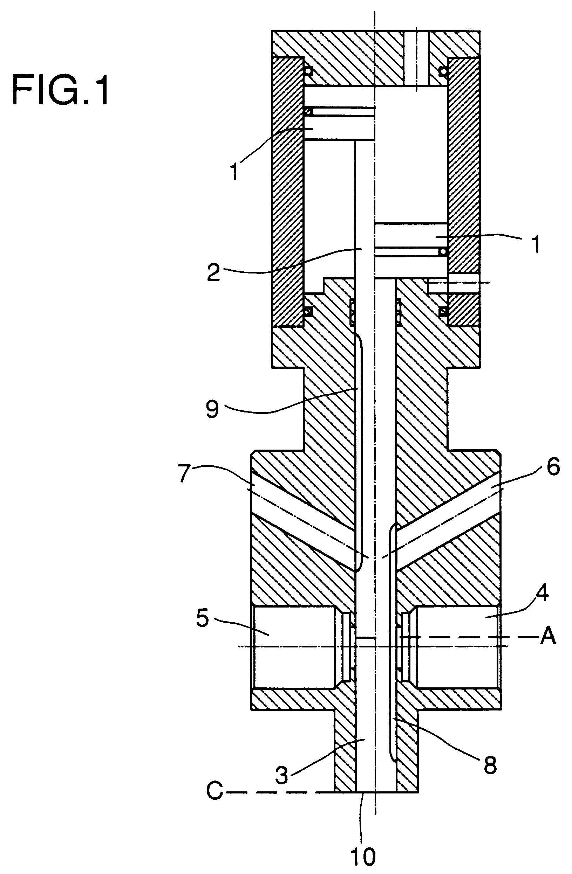

Die in Fig. 1 dargestellte bekannte Mischvorrichtung besteht aus einem Hydraulikkolben 1, an dem ein Steuerkolben 2 befestigt ist. Wie beim Betrachten der Fig. 1 deutlich wird, ist dieser Hydraulikkolben 1 mit dem Steuerkolben 2 von einer "oberen" Offenstellung in eine "untere" Zustellung bewegbar.

In das Gehäuse führen Eintrittsöffnungen 4 und 5 für zwei Komponenten in eine Mischkammer 3.

Rücklauföffnungen sind mit 6 und 7 bezeichnet. In dem Steuerkolben 2 sind Rücklaufnuten 8 und 9 ausgebildet. Die Austrittsöffnung aus der Mischkammer 3 ist mit 10 bezeichnet.

Links ist in Fig. 1 die Mischstellung dargestellt. Die aus den Eintritts-Öffnungen 4 und 5 in die Mischkammer 3 eintretenden Komponenten werden in der Mischkammer gemischt und treten bei 10 wieder aus. In der rechts dargestellten Absperr- oder Räumstellung wird ein Aufeinandertreffen der Komponenten verhindert, da diese aus der Eintrittsöffnung 4 durch die Rücklaufnut 8 in die Rücklauföffnung 6 und aus der Eintrittsöffnung 5 durch die Rücklaufnut 9 in die Rücklauföffnung 7 strömen. Bei der Bewegung des Steuerkolbens 2 von der einen in die andere Stellung wird die Mischkammer geräumt, d.h. mechanisch gereinigt. Es ist leicht erkennbar, daß die Länge der Rücklaufnuten 8 und 9 der Länge der Mischkammer entspricht, so daß während des gesamten Hubes nach dem Absperren des Eintritts der Komponenten durch die Eintrittsöffnungen 4 und 5 bis in die Absperr- oder Räumstellung eine Rezirkulation durch die Rücklaufnuten 8 und 9 sichergestellt ist. Entsprechend lang ist der sich anschließende Hydraulikteil. Die Gesamtlänge der Vorrichtung wird durch das Dreifache der Länge des Hubes des Steuerkolbens bestimmt.

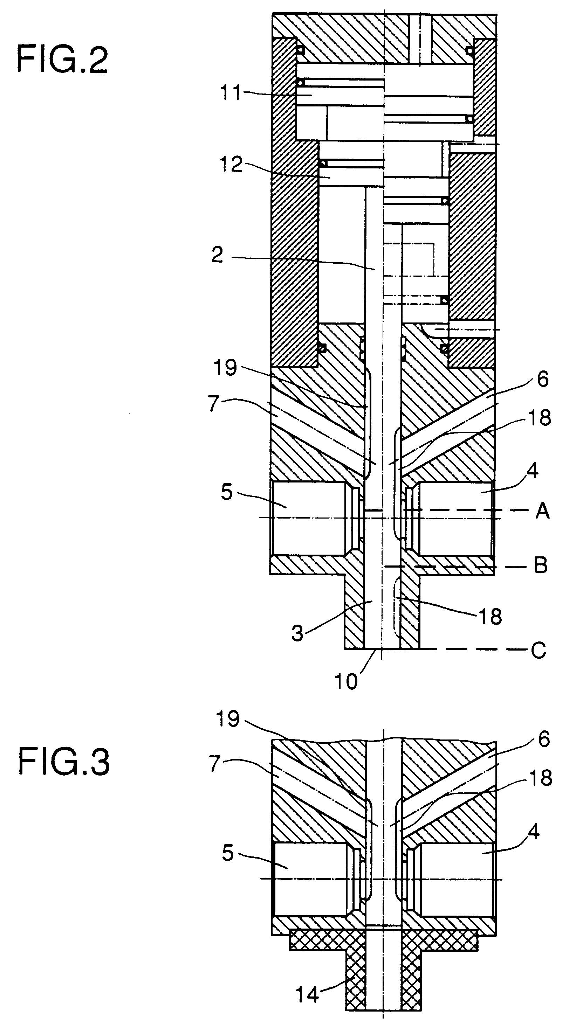

In Fig. 2 ist nun die Mischvorrichtung nach der Erfindung dargestellt, wobei gleiche Teile mit gleichen Bezugzeichen wie in Fig. 1 versehen sind. Der Hydraulikkolben ist zweiteilig ausgebildet, d.h. es sind zwei Hydraulikkolben 11 und 12 vorhanden. Die Rücklaufnuten sind mit 18 und 19 bezeichnet und - wie es beim Vergleich der beiden Fig. 1 und 2 deutlich wird - sehr viel kürzer.

Wenn die links in Fig. 2 dargestellte Mischstellung eingenommen wird, so strömen die Komponenten durch die Eintrittsöffnungen 4 und 5 in die Mischkammer 3, in der die Mischung stattfindet. Wenn der Mischvorgang beendet werden soll, wird der Steuerkolben 2 durch Druckbeaufschlagung des Hydraulikkolbens 11 aus der Stellung A (Mischstellung) in die Zwischenstellung B bewegt. In dieser Stellung erfolgt der Rücklauf über die kurzen Rücklaufnuten 18 und 19. Im Anschluß daran wird der Steuerkolben durch Druckbeaufschlagung des Hydraulikkolbens 12 in die Räumstellung C bewegt. In dieser Stellung erfolgt keine Rezirkulation durch die Rücklaufnuten 18 und 19. Für eine entsprechende Rezirkulation wird auf andere, nicht gezeigte Weise, gesorgt, d.h. durch Zwischenschaltung nicht gezeigter Ventile. In der Räumstellung C verbleibt der Steuerkolben 2 nur verhältnismäßig kurz. Er wird dann zurückbewegt in die Zwischenstellung B, in der wieder der "herkömmliche Rücklauf" durch die Rücklaufnuten 18 und 19 erfolgen kann. In dieser Stellung ist er bereit für den nächsten Schuß, wobei die Bewegung in die Schuß- oder Mischstllung nur eine sehr kurze ist.

Es ist leicht erkennbar, daß die Länge der Rücklaufnuten 18 und 19 nicht mehr von der Länge der Mischkammer 3 abhängig ist, sondern daß die Länge der Rücklaufnuten 18 und 19 nur noch von dem Abstand der Eintrittsöffnungen 4, 5 von den Rücklauföffnungen 6, 7 bestimmt wird.

In Fig. 3 ist dargestellt, daß eine Auslauftülle 14 beliebiger Gestalt angebaut werden kann. Die Paßgenauigkeit der Bohrung dieser Auslauftülle 14 im Verhältnis zum Steuerkolben 2 ist nicht kritisch, d.h. es werden keine hohen Anforderungen an die Fertigungsgenauigkeit gestellt.

**Patentansprüche**

1.  Mischvorrichtung zur Verarbeitung flüssiger Mehrkomponenten-Kunststoffe, insbesondere Polyurethan, mit einer Mischkammer (3), die Eintrittsöffnungen (4,5) für die einzelnen Komponenten und eine Austrittsöffnung (10) für das Komponentengemisch besitzt, mit einem in der Mischkammer angeordneten und ihrem Querschnitt angepaßten Steuerkolben (2), der aus einer die Eintrittsöffnungen offen lassenden Stellung bis in den Bereich der Austrittsöffnung, dabei die Eintrittsöffnungen gegenüber der Mischkammer absperrend, hin- und herbewegbar ist, und mit einer in der Mantelfläche des Steuerkolbens (2) vorgesehenen Rücklaufnut (18,19) für jede Komponente, durch die die Eintrittsöffnungen zeitsynchron mit ihrer Absperrung von der Mischkammer mit Rücklauföffnungen (6,7) verbindbar sind, dadurch gekennzeichnet, daß die Rücklaufnuten (18,19) eine Länge aufweisen, die gleich dem Abstand der durch sie zu verbindenden Eintritts- und Rücklauföffnungen (4,5; 6,7) ist, und daß der Steuerkolben (2) in einer Zwischenstellung (B), in der die Rücklaufnuten (18,19) die Eintrittsöffnungen (4,5) mit den zugeordneten Rücklauföffnungen (6,7) verbinden, und in die weiter vorgeschobene Räumstellung (C) bewegbar ist, in der die Rücklaufnuten (18,19) nicht mehr mit den Eintrittsöffnungen und Rücklauföffnungen verbunden sind.

2.  Mischvorrichtung nach Anspruch 1, dadurch gekennzeichnet, daß an dem Mischkammeraustritt eine getrennte Auslauftülle (14) befestigbar ist.

# FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | PATENT ABSTRACTS OF JAPAN vol. 12, no. 325 (M-737)(3172) 5. September 1988 & JP-A-63 092 415 ( NIPPON PLAST ) * Zusammenfassung * --- | 1 | B29B7/76 |
| A | DE-A-3 017 950 (HENNECKE) ----- | 2 | |
| | | | **RECHERCHIERTE SACHGEBIETE (Int. Cl.5)** |
| | | | B29B |

Der vorliegende Recherchenbericht wurde für alle Patentansprüche erstellt

| Recherchenort | Abschlußdatum der Recherche | Prüfer |
|---|---|---|
| DEN HAAG | 12 MAI 1992 | PEETERS S. |